# FASCICULE DE BREVET EUROPEEN

(11) **EP 2 934 081 B1**
(45) Date de publication et mention de la délivrance du brevet: **22.02.2017**
(21) Numéro de dépôt: 13818327.2
(22) Date de dépôt: 17.12.2013
(51) Int. Cl.: A01C 7/08, A01C 7/04

(54) **MACHINE DE DISTRIBUTION AVEC UN DISPOSITIF D'ALIMENTATION A DISTANCE D'AU MOINS UN RESERVOIR AUXILIAIRE COMPORTANT UN DISPOSITIF D'ECHAPPEMENT D'AIR**
VERTEILMASCHINE MIT EINER EINRICHTUNG ZUR BEFÜLLUNG MINDESTENS EINES ZUSATZBEHÄLTERS DER EINE ENTLÜFTUNGSEINRICHTUNG UMFASST
DISTRIBUTION MACHINE WITH A DEVICE FOR FEEDING AT LEAST ONE AUXILIARY HOPPER THAT COMPRISES A VENTILATION DEVICE

(30) Priorité: 19.12.2012 FR 1262297
(43) Date de publication de la demande: 28.10.2015
(73) Titulaire: KUHN S.A., 67700 Saverne (FR)
(72) Inventeur: AUDIGIE, Jean-Charles, F-67330 Bouxwiller (FR); EBERHART, Julien, F-57370 Veckersviller (FR); SUPPER, Nicolas, F-67310 Dangolsheim (FR)
(74) Mandataire: Esch, Esther Evelyne
(86) Numéro de dépôt international: PCT/FR2013/053118
(87) Numéro de publication internationale: WO 2014/096671

(56) Documents cités:
- WO-A1-2011/002541
- FR-A1- 2 973 790
- US-A1- 2003 177 966
- US-A1- 2008 264 313

## Description

La présente invention se rapporte au domaine technique général du machinisme agricole. L'invention concerne une machine de distribution avec un dispositif d'alimentation pour une alimentation pneumatique autorégulée à partir d'un réservoir principal contenant du produit vers au moins un réservoir auxiliaire en fonction de son taux de remplissage via un conduit étanche respectif, chaque réservoir auxiliaire comportant un dispositif d'échappement d'air et un boîtier de distribution pour distribuer le produit comprenant une chambre d'alimentation et un élément rotatif de dosage.

Un tel dispositif d'alimentation pour un semoir est présenté dans la demande FR 2 315 834**.** Ce dispositif d'alimentation permet de transporter du produit, tel que des graines, à partir d'un réservoir principal vers au moins un réservoir auxiliaire. Le transport du produit est effectué via un flux d'air au travers d'un conduit étanche en fonction de l'état de remplissage du réservoir auxiliaire. Le réservoir auxiliaire présente un dispositif d'échappement d'air implanté sur une de ses parois latérales. Le dispositif d'échappement d'air crée une perte de charge qui décroit en fonction du remplissage du réservoir auxiliaire. Lorsque le réservoir auxiliaire est rempli, la perte de charge est nulle et le transport de graines depuis le réservoir principal est arrêté. Les réservoirs auxiliaires sont donc alimentés individuellement et automatiquement en graines en fonction de leur taux de remplissage. L'alimentation du réservoir auxiliaire via une fuite d'air est tributaire du type de produit qui est transporté et notamment de sa forme et de sa capacité à obstruer le dispositif d'échappement d'air.

Un autre dispositif d'alimentation pneumatique autorégulée pour une machine de distribution telle qu'un semoir est divulgué par le document WO 2011/002541. Les graines sont transportées à travers un conduit étanche depuis le réservoir principal vers les réservoirs auxiliaires. L'extrémité du conduit est pourvue d'ouvertures d'échappement d'air et est placée au-dessus du boîtier de distribution. Quand les graines s'accumulent sensiblement au-dessus des ouvertures d'échappement d'air, la réserve de graines atteint un niveau haut.

L'alimentation en graines est alors interrompue puisque le flux d'air n'arrive plus à traverser les graines. Le niveau de graines baisse au fur et à mesure que l'élément rotatif de dosage délivre les graines dans le sol. Lorsque les graines ont atteint un niveau bas en dessous des ouvertures, le flux d'air augmente et le transport de graines reprend et continu jusqu'à ce que le niveau haut soit à nouveau atteint. Les ouvertures du dispositif d'échappement d'air s'étendent au-dessus du boîtier de distribution, de ce fait le niveau maximum des graines est plus haut que le point de débordement de graines dans le boîtier de distribution. Les graines contenues dans le réservoir auxiliaire alimentent l'élément rotatif de dosage et ont tendance à « pousser » les graines de la chambre d'alimentation pour que le niveau de graine occupe la même hauteur dans le boîtier de distribution. Ce phénomène peut entraîner une remontée du lit de graines jusqu'au débordement et libérer des graines supplémentaires à celles prélevées par l'élément rotatif de dosage. La qualité de semis est de ce fait altérée en libérant un volume de graines au lieu d'un dosage monograine régulier. Par ailleurs, l'amorce du transport de graines, vers le réservoir auxiliaire presque vidé de graines, se fait souvent de manière incertaine du fait d'une fuite d'air au niveau du réservoir auxiliaire insuffisante. Dans ce cas, l'élément rotatif de dosage risque de tourner sans graines.

Le document FR 2 973 790 décrit un dispositif d'alimentation pour une alimentation autorégulée avec un réservoir auxiliaire comportant un dispositif d'échappement d'air positionné au-dessus du point de débordement.

La présente invention a pour but de remédier aux inconvénients précités. Elle doit notamment proposer une machine de distribution avec un boîtier de distribution alimenté à distance en produit et dont la réserve de produit est minimum tout en assurant une alimentation correcte de l'élément rotatif de dosage.

A cet effet, une importante caractéristique consiste en ce que ledit dispositif d'échappement d'air est configuré pour s'étendre sensiblement en dessous du point de débordement de la chambre d'alimentation. Grâce à cette caractéristique, le risque de débordement du lit de graines est éliminé car le niveau maximum de graines du réservoir auxiliaire se trouve en dessous du point de débordement de la chambre d'alimentation. L'élément rotatif de dosage est dans tous les cas alimenté correctement pour avoir une bonne distribution des graines.

Selon une autre importante caractéristique, le dispositif d'échappement d'air est prévu pour disposer d'ouvertures dans au moins deux parois sensiblement verticales du réservoir auxiliaire. Avec une surface d'échappement d'air et donc une fuite plus importante, la consigne d'appel pour amorcer le transport de graines est claire et franche.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** montre une vue de côté d'une machine de distribution avec un dispositif d'alimentation selon l'invention,
- la **figure 2** illustre le fonctionnement d'un boîtier de distribution,
- la **figure 3** est une vue en perspective d'un boîtier de distribution avec un réservoir auxiliaire,
- la **figure 4** représente la partie intérieure du boîtier de distribution et du réservoir auxiliaire,
- la **figure 5** est une vue en coupe de la figure 4.

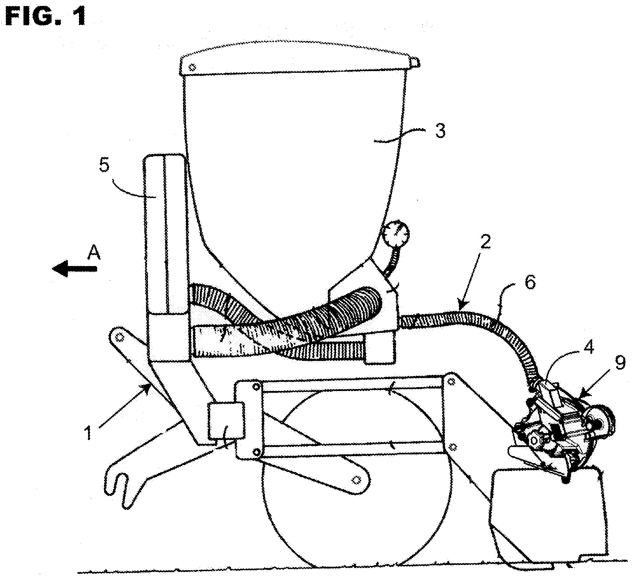

La figure 1 est une vue latérale d'une machine agricole de distribution (1) avec un dispositif d'alimentation (2) pour une alimentation pneumatique autorégulée selon l'invention. La machine de distribution (1) présente notamment un réservoir principal (3) destiné à contenir du produit et au moins un réservoir auxiliaire (4). Chaque réservoir auxiliaire (4) est alimenté à distance via le dispositif d'alimentation (2) à partir du réservoir principal (3). L'alimentation et donc le transport de produit se fait par un flux d'air généré par un ventilateur (5). Le débit d'air en entrée du ventilateur (5) et le débit en sortie sont réglables. L'alimentation est réalisée de manière individuelle et en fonction du taux de remplissage du réservoir auxiliaire (4) via un conduit étanche (6) respectif. Chaque réservoir auxiliaire (4) comporte un dispositif d'échappement d'air (7) pour évacuer le flux d'air utilisé pour le transport de produit. Le dispositif d'échappement d'air (7) est une fuite. Il est réalisé sous forme d'ouvertures (8) ménagées dans le réservoir auxiliaire (4). La taille de ces ouvertures (8) est telle que le produit à transporter ne peut pas s'échapper au travers des ouvertures (8).

Le ventilateur (5) fournit un flux d'air sous forme d'air comprimé qui extrait le produit du réservoir principal (3) pour le faire parvenir aux réservoirs auxiliaires (4) par le conduit étanche (6) respectif. L'accumulation de produit dans le réservoir auxiliaire (4) provoque une perte de charge qui ralentit suffisamment le flux d'air dans le conduit étanche (6) pour empêcher le transport du produit. L'alimentation du réservoir auxiliaire (4) est ainsi interrompue, lorsqu'il est plein. Lorsque le réservoir auxiliaire (4) s'est vidé, le produit n'est plus accumulé devant le dispositif d'échappement d'air (7). La perte de charge diminue et le transport de produit reprend. Le dispositif d'alimentation (2) permet donc une alimentation autorégulée en fonction du taux de remplissage du réservoir auxiliaire (4).

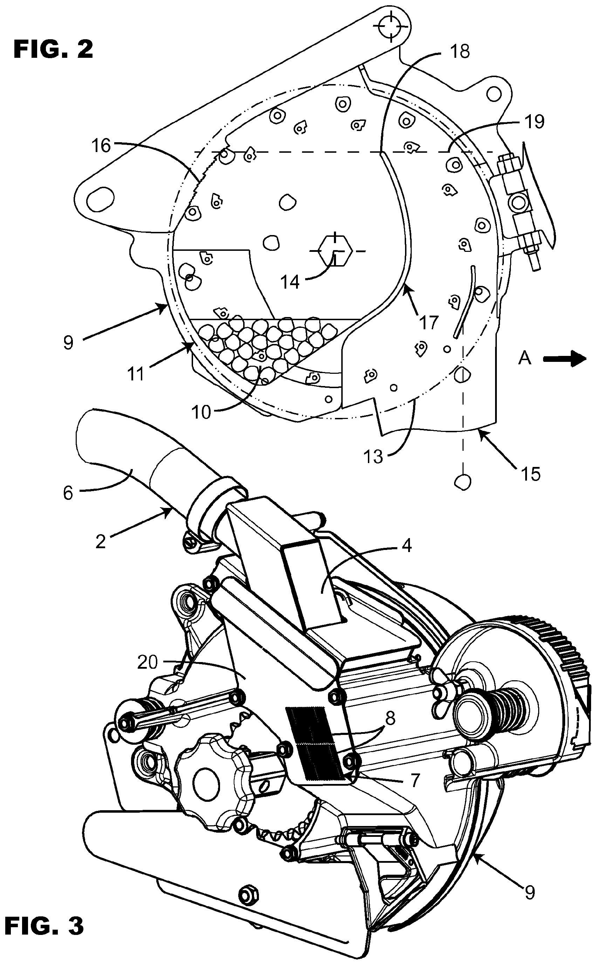

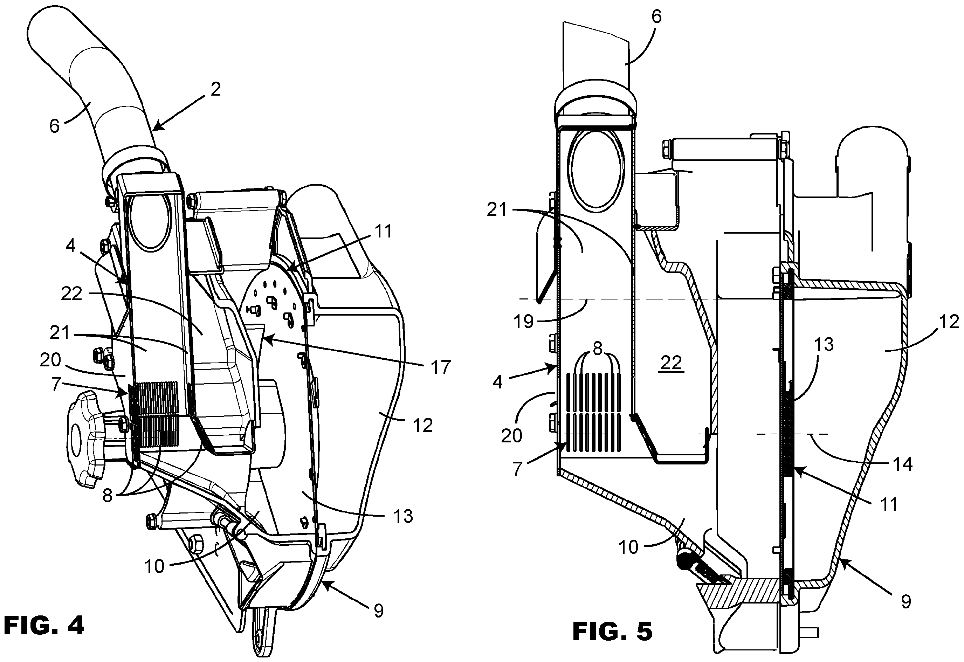

La figure 3 montre un boîtier de distribution (9) auquel est associé un réservoir auxiliaire (4). Le boîtier de distribution (9) comprend une chambre d'alimentation (10) contenant du produit et un élément rotatif de dosage (11). La chambre d'alimentation (10) est alimentée en produit via le réservoir auxiliaire (4). La figure 4 illustre, grâce à une coupe, l'intérieur du boîtier de distribution (9) et du réservoir auxiliaire (4). On peut ainsi voir le dispositif d'échappement d'air (7) à l'intérieur du réservoir auxiliaire (4). La figure 5 est une vue en coupe du boîtier de distribution (9) avec le réservoir auxiliaire (4). Les figures représentent un boîtier de distribution (9), à disque vertical, conforme à l'invention. Ce boîtier de distribution (9) a pour rôle d'extraire les graines une à une et de les répartir à intervalle constant sur le rang de semis. De tels boîtiers de distribution (9) se trouvent sur des semoirs du type monograine. Chaque élément semeur possède son propre boîtier de distribution (9) avec un disque perforé (13). La sélection de la graine est assistée par un flux d'air en dépression. La sélection de la graine peut également être réalisée de manière alternative par un flux d'air en pression avec un disque perforé ou à alvéoles. Le boîtier de distribution peut également être entièrement mécanique sans nécessiter de flux d'air pour sélectionner les graines.

Dans l'exemple représenté sur les figures, le boîtier de distribution (9) est une distribution à dépression qui permet d'extraire une à une des graines du réservoir auxiliaire (4) et de les répartir à intervalle constant sur le rang. Le boîtier de distribution (9) comprend ainsi la chambre d'alimentation (10), une chambre d'aspiration (12) et un disque perforé (13) séparant les deux chambres (10, 12). Dans cet exemple, l'élément rotatif de dosage (11) est le disque perforé (13). Le disque perforé (13) est destiné à tourner autour d'un axe de rotation (14) sensiblement horizontal. Les graines sont prélevées dans le fond du boîtier de distribution (9) et sont lâchées au niveau de l'ouverture d'expulsion (15) pour ensuite arriver dans le sillon. Durant le fonctionnement, le disque perforé (13) plonge dans le fond de boîtier de distribution (9) et tourne pour emporter des graines. Au moins une graine est aspirée par la dépression qui la plaque sur chaque perforation du disque perforé (13). Les graines sont retenues pendant au moins une partie de leur déplacement angulaire. Pendant la rotation, les graines passent devant un sélecteur (16) qui n'en laisse qu'une par perforation. Un éjecteur facilite le décrochement des graines pour libérer la graine qui tombe dans le sillon au niveau de l'ouverture d'expulsion (15). Une telle distribution à disque vertical répartie les graines à intervalle constant sur le rang.

D'une manière avantageuse et selon l'exemple représenté à la figure 2, une cloison (17) sensiblement verticale est prévue dans la chambre d'alimentation (10) pour récupérer les graines supplémentaires éliminées par le sélecteur (16) lors de la rotation du disque perforé (13). La cloison (17) est placée, compte tenu de la rotation du disque, après le sélecteur (16). Cette cloison (17) permet de séparer la partie sélection et la partie expulsion de graines de la chambre d'alimentation (10). La cloison (17) a également pour fonction de retenir les graines lors d'un semis en pente descendante assez forte. Elle a pour rôle de retenir les graines dans la partie sélection lorsque le lit de graines monte momentanément. La distribution des graines est précise et régulière tant que les graines du fond du boîtier de distribution (9) ne passent pas au-delà de la cloison (17). D'une manière générale, le point de débordement (18) du boîtier de distribution (9) est la limite au-delà de laquelle la distribution ne fonctionne plus avec précision. Dans l'exemple de la figure 2, le point de débordement (18) correspond au sommet de la cloison (17) qui s'étend dans la partie supérieure du boîtier de distribution (9). Quelques graines sont représentées dans le fond du boîtier de distribution (9) sur la figure 2. Il s'agit du niveau idéal du lit de graines permettant d'assurer une alimentation correcte du disque perforé (13). Lorsque le lit de graines dépasse le plan horizontal (19) et donc le point de débordement (18), le boîtier de distribution (9) libère des graines supplémentaires à celles prélevées par le disque perforé (13). La qualité du semis est donc altérée puisque la distribution monograine n'est plus capable d'extraire les graines une à une. Afin de remédier à ce problème, le lit de graines du boîtier de distribution (9) s'étend à un niveau bien inférieur par rapport au point de débordement (18) et à un plan (19) sensiblement horizontal passant par le point de débordement (18). Pour que les graines éliminées par le sélecteur (16) soient dirigées vers le fond du boîtier de distribution (9), le point de débordement (18) s'étend au-dessus du sélecteur (16). La cloison (17) s'étend à l'avant de l'axe de rotation (14) du disque perforé (13). De manière préférentielle, le point de débordement (18) s'étend au-dessus d'au moins une partie du sélecteur (16).

Selon une importante caractéristique de l'invention, le dispositif d'échappement d'air (7) est configuré pour s'étendre sensiblement en dessous du point de débordement (18) de la chambre d'alimentation (10). L'air soufflé dans le réservoir auxiliaire (4) pour le transport de graines ne doit pas rester dans la chambre d'alimentation (10) du boîtier de distribution (9) pour un bon fonctionnement, c'est pourquoi il est prévu qu'il s'échappe par les ouvertures (8) du dispositif d'échappement d'air (7). Le dispositif d'échappement d'air (7) se situe en dessous d'un plan horizontal (19) passant par le point de débordement (18). De cette manière, le risque de débordement du lit de graines dans la partie sélection est éliminé car le niveau maximum de graines du réservoir auxiliaire (4) se trouve en dessous du point de débordement (18) de la chambre d'alimentation (10). Même si lors du fonctionnement, les graines du réservoir auxiliaire (4) ont tendance à pousser les graines de la chambre d'alimentation (10), le lit de graines ne dépasse pas le point de débordement et la précision de distribution sera celle de l'élément rotatif de dosage (11).

Selon une caractéristique avantageuse, au moins une partie du dispositif d'échappement d'air (7) est intégré dans le boîtier de distribution (9). L'intégration totale du dispositif d'échappement d'air (7) dans le boîtier de distribution (9) permet de constituer une solution compacte. Le dispositif d'échappement d'air (7) s'étend avantageusement dans le fond du réservoir auxiliaire (4). Le niveau haut et le niveau bas de graines dans le réservoir auxiliaire (4) sont établis par le dispositif d'échappement d'air (7) et notamment par la position des ouvertures (8) de fuite d'air du dispositif d'échappement d'air (7). La configuration du réservoir auxiliaire (4) et du dispositif d'échappement d'air (7) sont telles que le niveau bas de graines correspond à un stock de graines réduit et suffisant pour une alimentation sans manque de l'élément rotatif de dosage (11).

Selon la figure 4, le dispositif d'échappement d'air (7) est réalisé sous forme d'ouvertures (8) ménagées dans au moins deux parois sensiblement verticales du réservoir auxiliaire (4). Avec des ouvertures (8) sur plus d'une paroi, la mise à l'échappement et donc la fuite d'air du réservoir auxiliaire (4) est plus importante. Les dimensions des ouvertures (8) sont inférieures à celles du produit à distribuer. Les ouvertures (8) sont ménagées dans le réservoir auxiliaire (4) et notamment dans une paroi extérieure (20) du réservoir auxiliaire (4) et dans au moins une paroi intérieure (21). La paroi extérieure (20) s'étend à l'extérieur du boîtier de distribution (9) alors qu'une paroi intérieure (21) s'étend à l'intérieur du boîtier de distribution (9). La configuration du réservoir auxiliaire (4) est généralement telle que la paroi extérieure (20) est une paroi disposant d'une surface importante permettant d'y ménager un grand nombre d'ouvertures (8). En apposant des ouvertures (8) en plus sur une paroi intérieure (21) du réservoir auxiliaire (4), la surface d'échappement d'air augmente et la consigne d'appel pour amorcer le transport de graines est plus claire. D'une manière avantageuse, la paroi interne (21) pourvue d'ouvertures (8) est celle qui s'étend de manière opposée à la paroi extérieure (20). De cette manière, la surface d'échappement d'air est doublée.

Dans l'exemple de réalisation représenté, la forme du réservoir auxiliaire (4) est parallélépipédique, les parois sont sensiblement planes et verticales. Le réservoir auxiliaire (4) comporte une paroi extérieure (20) et trois parois intérieures (21). Les ouvertures (8) sont ménagées sur toute la périphérie du réservoir auxiliaire (4), ainsi chacune des parois est munie d'ouvertures (8). Le dispositif d'échappement d'air (7) dispose alors d'une très grande surface de fuite d'air ce qui permet un amorçage optimal du transport de graines vers le réservoir auxiliaire (4). Toutes les ouvertures (8) s'étendent en dessous du plan horizontal (19). Certaines ouvertures (8) sont également ménagées dans des parois inclinées. Par ailleurs, une majorité d'ouvertures (8) s'étendent au-dessus d'un plan horizontal passant par l'axe de rotation de l'élément rotatif de dosage (11) et notamment au-dessus d'un plan horizontal passant par l'axe de rotation (14) du disque perforé (13).

D'une manière avantageuse, une chambre d'échappement (22) s'étend au moins partiellement autour du réservoir auxiliaire (4). La chambre d'échappement (22) permet, par exemple, aux ouvertures (8) de la paroi intérieure (21) d'évacuer l'air soufflé lorsqu'il s'agit de la paroi intérieure (21) qui s'étend de manière opposée à la paroi extérieure (20). La chambre d'échappement (22) s'étend entre le réservoir auxiliaire (4) et l'élément rotatif de dosage (11). La chambre d'échappement (22) permet à l'air soufflé dans les conduits étanches (6) d'être aussi évacué par les ouvertures ménagées dans les parois intérieures (21) du réservoir auxiliaire (4). La chambre d'échappement (22) s'étend avantageusement autour du réservoir auxiliaire (4) de manière à ce que les trois parois intérieures (21) évacuent l'air soufflé. Grâce à la chambre d'échappement (22), toutes les ouvertures (8) du réservoir auxiliaire (4) sont mises à l'air.

Dans une alternative non représentée, l'élément rotatif de dosage est un doseur volumétrique à cannelures ou à ergots. Un tel doseur est adapté au semis de céréales (blé, orge) ou pour l'engrais. Une telle distribution dispose également d'un point de débordement au-delà duquel la distribution volumétrique n'est plus capable d'extraire une quantité déterminée de graines du réservoir puisqu'elle libèrera aussi des graines supplémentaires.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de distribution (1) avec un dispositif d'alimentation (2) pour une alimentation pneumatique autorégulée à partir d'un réservoir principal (3) contenant du produit vers au moins un réservoir auxiliaire (4) en fonction de son taux de remplissage via un conduit étanche (6) respectif, chaque réservoir auxiliaire (4) comportant un dispositif d'échappement d'air (7) et un boîtier de distribution (9) pour distribuer le produit comprenant une chambre d'alimentation (10) et un élément rotatif de dosage (11), ***caractérisée en ce que*** ledit dispositif d'échappement d'air (7) est configuré pour s'étendre sensiblement en dessous du point de débordement (18) de ladite chambre d'alimentation (10).

2. Machine de distribution selon la revendication 1, ***caractérisée en ce que*** ledit dispositif d'échappement d'air (7) est intégré dans le boîtier de distribution (9).

3. Machine de distribution selon la revendication 1 ou 2, ***caractérisée en ce que*** ledit dispositif d'échappement d'air (7) est réalisé sous forme d'ouvertures (8) ménagées dans au moins deux parois (20, 21) sensiblement verticales du réservoir auxiliaire (4), les dimensions des ouvertures (8) étant inférieures à celles du produit à distribuer.

4. Machine de distribution selon l'une quelconque des revendications 1 à 3, ***caractérisée en ce que*** des ouvertures (8) sont ménagées dans une paroi extérieure (20) et dans au moins une paroi intérieure (21) du réservoir auxiliaire (4).

5. Machine de distribution selon la revendication 4, ***caractérisée en ce que*** ladite paroi intérieure (21) s'étend de manière opposée à la paroi extérieure (20).

6. Machine de distribution selon la revendication 4, ***caractérisée en ce que*** ledit réservoir auxiliaire (4) présente des ouvertures (8) sur toute sa périphérie.

7. Machine de distribution selon l'une quelconque des revendications 1 à 6, ***caractérisée en ce qu**'*une chambre d'échappement (22) s'étend au moins partiellement autour du réservoir auxiliaire (4).

8. Machine de distribution selon la revendication 7, ***caractérisée en ce que*** ladite chambre d'échappement (22) s'étend entre le réservoir auxiliaire (4) et l'élément rotatif de dosage (11).

9. Machine de distribution selon l'une quelconque des revendications 3 à 8, ***caractérisée en ce que*** toutes lesdites ouvertures (8) du dispositif d'échappement d'air (7) s'étendent en dessous d'un plan horizontal (19) passant par le point de débordement (18).

10. Machine de distribution selon l'une quelconque des revendications 1 à 9, ***caractérisée en ce qu***'il s'agit d'un semoir.

## Patentansprüche

1. Verteilmaschine (1) mit einer Versorgungsvorrichtung (2) für eine selbstregulierende pneumatische Versorgung aus einem Hauptbehälter (3), der ein Produkt enthält, in mindestens einen Nebenbehälter (4) in Abhängigkeit von dessen Füllgrad, über eine jeweilige dichte Leitung (6), wobei jeder Nebenbehälter (4) eine Luftauslassvorrichtung (7) und eine Verteileinheit (9) zum Verteilen des Produkts umfasst, wobei die Verteileinheit (9) eine Versorgungskammer (10) und ein drehendes Dosierungselement (11) umfasst, ***dadurch gekennzeichnet, dass*** die Luftauslassvorrichtung (7) ausgelegt ist, um sich im Wesentlichen unter dem Überlaufpunkt (18) der Versorgungskammer (10) zu erstrecken.

2. Verteilmaschine nach Anspruch 1, ***dadurch gekennzeichnet, dass*** die Luftauslassvorrichtung (7) in die Verteileinheit (9) eingebaut ist.

3. Verteilmaschine nach Anspruch 1 oder 2, ***dadurch gekennzeichnet, dass*** die Luftauslassvorrichtung (7) in Form von Öffnungen (8) ausgeführt ist, die in mindestens zwei im Wesentlichen senkrechten Wänden (20, 21) des Nebenbehälters (4) vorgesehen sind, wobei die Abmessungen der Öffnungen (8) kleiner sind als jene des zu verteilenden Produkts.

4. Verteilmaschine nach irgendeinem der Ansprüche 1 bis 3, ***dadurch gekennzeichnet, dass*** Öffnungen (8) in einer Außenwand (20) und in mindestens einer Innenwand (21) des Nebenbehälters (4) vorgesehen sind.

5. Verteilmaschine nach Anspruch 4, ***dadurch gekennzeichnet, dass*** sich die Innenwand (21) der Außenwand (20) gegenüberliegend erstreckt.

6. Verteilmaschine nach Anspruch 4, ***dadurch gekennzeichnet*, *dass*** der Nebenbehälter (4) auf seinem gesamten Umfang Öffnungen (8) aufweist.

7. Verteilmaschine nach irgendeinem der Ansprüche 1 bis 6, ***dadurch gekennzeichnet, dass*** sich eine Auslasskammer (22) mindestens teilweise rund um den Nebenbehälter (4) erstreckt.

8. Verteilmaschine nach Anspruch 7, ***dadurch gekennzeichnet, dass*** sich die Auslasskammer (22) zwischen dem Nebenbehälter (4) und dem drehenden Dosierungselement (11) erstreckt.

9. Verteilmaschine nach irgendeinem der Ansprüche 3 bis 8, ***dadurch gekennzeichnet*, *dass*** sich alle Öffnungen (8) der Luftauslassvorrichtung (7) unter einer waagrechten Ebene (19) erstrecken, die durch den Überlaufpunkt (18) verläuft.

10. Verteilmaschine nach irgendeinem der Ansprüche 1 bis 9, ***dadurch gekennzeichnet*, *dass*** es sich um eine Sämaschine handelt.

## Claims

1. Distribution machine (1) with a supply device (2) for a self-regulated pneumatic supply from a main reservoir (3) containing product toward at least one auxiliary reservoir (4) according to its filling rate via a respective tight duct (6), each auxiliary reservoir (4) comprising an air exhaust device (7) and a distribution unit (9) for distributing the product comprising a supply chamber (10) and a rotary regulating element (11), ***characterized in that*** the air exhaust device (7) is configured to extend substantially below the overflow spot (18) of the said supply chamber (10).

2. Distribution machine according to claim 1, ***characterized in that*** the said air exhaust device (7) is integrated into the distribution unit (9).

3. Distribution machine according to claim 1 or 2, ***characterized in that*** the said air exhaust device (7) is made in the form of openings (8) arranged in at least two substantially vertical walls (20, 21) of the auxiliary reservoir (4), the dimensions of the openings (8) being smaller than those of the product to be distributed.

4. Distribution machine according to any one of claims 1 to 3, ***characterized in that*** openings (8) are arranged in an outer wall (20) and at least one inner wall (21) of the auxiliary reservoir (4).

5. Distribution machine according to claim 4, ***characterized in that*** the said inner wall (21) extends opposite the outer wall (20).

6. Distribution machine according to claim 4, ***characterized in that*** the said auxiliary reservoir (4) has openings (8) over its entire periphery.

7. Distribution machine according to any one of claims 1 to 6, ***characterized in that*** an exhaust chamber (22) extends at least partially around the auxiliary reservoir (4).

8. Distribution machine according to claim 7, ***characterized in that*** the said exhaust chamber (22) extends between the auxiliary reservoir (4) and the rotary regulating element (11).

9. Distribution machine according to any one of claims 3 to 8, ***characterized in that*** all of the said openings (8) of the air exhaust device (7) extend below a horizontal plane (19) passing through the overflow spot (18).

10. Distribution machine according to any one of claims 1 to 9, ***characterized in that*** it is a seeder.
